# EUROPÄISCHE PATENTSCHRIFT

(11) **EP 1 012 870 B1**
(45) Veröffentlichungstag und Bekanntmachung des Hinweises auf die Patenterteilung: **07.05.2008**
(21) Anmeldenummer: 98913603.1
(22) Anmeldetag: 27.02.1998
(51) Int. Cl.: H01J 41/06, G01L 21/34

(54) **PENNING-VAKUUMMETER**
PENNING VACUUM METER
VACUOMETRE DE PENNING

(30) Priorität: 24.04.1997 DE 19717263
(43) Veröffentlichungstag der Anmeldung: 28.06.2000
(73) Patentinhaber: Inficon GmbH, 7310 Bad Ragaz (CH)
(72) Erfinder: GROSSE BLEY, Werner, D-53125 Bonn (DE); KÜSTER, Gerhard, D-51109 Köln (DE)
(74) Vertreter: Leineweber, Jürgen
(86) Internationale Anmeldenummer: PCT/EP1998/001111
(87) Internationale Veröffentlichungsnummer: WO 1998/048445

(56) Entgegenhaltungen:
- EP-A- 0 271 769
- EP-A- 0 516 422
- DE-A- 3 712 874
- DE-A- 19 528 314

## Beschreibung

Die Erfindung betrifft ein Penning-Vakuummeter mit den Merkmalen des Oberbegriffs des Patentanspruchs 1.

Penning-Vakuummeter dieser Art sind aus den europäischen Patentanmeldungen 271 769 A1 und 516 422 A2 sowie aus der deutschen Offenlegungsschrift 37 12 874 A1 bekannt.

Ein Penning-Vakuummeter ist ein Kaltkatoden-Vakuummeter, das mit einer kalten Entladung arbeitet. Es umfasst eine Röhre mit zwei nicht beheizten Elektroden, Katode und Anode, zwischen denen mittels einer Gleichspannung (im Betrieb ca. 2 kV) die Entladung gezündet und aufrechterhalten wird, die auch noch bei sehr tiefen Drucken stationär brennt. Dieses wird dadurch erreicht, daß mit Hilfe eines Magnetfeldes der Weg der Elektronen so lang gemacht wird, daß ihre Stoßrate mit Gasmolekülen hinreichend groß ist, um die zur Aufrechterhaltung der Entladung erforderliche Anzahl von Ladungsträgern zu bilden.

In den Röhren von Penning-Vakummetern findet, insbesondere in Beschichtungsprozessen mit schweren Edelgasen (Argon, Xenon), die im Druckbereich 10⁻⁴ - 10⁻² mbar ablaufen, durch die in Richtung Katode beschleunigten Ionen eine Zerstäubung des Katoden-Materials statt. Das zerstäubte Katoden-Material bildet auf den Wandungen der Meßröhre eine leitfähige Schicht. Als Werkstoff für die Katode wird in aller Regel Edelstahl verwendet.

Infolge der beschriebenen Katodenzerstäubung ("Sputtern") ist die Lebensdauer der Katode begrenzt. Zerstäubtes Edelstahl-Katodenmaterial ist außerdem magnetisch. Sich lösende Teile der entstandenen Schichten sind in der Lage, sich im Magnetfeld auszurichten und Kurzschlüsse zu verursachen. Darüberhinaus können Teile der Messzelle, die eigentlich isolierend sein sollen (keramische Stromdurchführungen) leitfähig werden. Diese Nachteile führen zu instabiler Anzeige oder Verlöschen der Entladung und damit Ausfall der Messröhre. Dennoch wird das Penning-Vakuummeter sehr häufig eingesetzt, da es preiswert und unempfindlich gegen Lufteinbrüche und Erschütterungen ist.

Zum Stand der Technik gehört außerdem der Inhalt der deutschen Offenlegungsschrift 195 28 314 A1. Offenbart ist ein in der Vakuumtechnik einsetzbares Gerät mit Elektroden für eine Gasentladung. Zu Geräten dieser Art gehören Penning-Vakuummeter, Ionenquellen, Ionenzerstäuberpumpen o.dgl. Im Zusammenhang mit einer Dioden-Ionen-Zerstäuberpumpe ist offenbart, Titan als Katodenwerkstoff zu verwenden.

Der vorliegenden Erfindung liegt die Aufgabe zugrunde, die infolge der beschriebenen Zerstäubung auftretenden nachteiligen Wirkungen weitgehend zu beseitigen sowie das Zündverhalten zu verbessern.

Erfindungsgemäß wird diese Aufgabe durch die kennzeichnenden Merkmale der Patentansprüche gelöst.

Wegen der geringeren Sputterausbeute findet beim Einsatz von Titan nur noch eine geringe Absputterung des Katodenwerkstoffes statt. Die Standzeit der Katode ist dadurch verbessert und die Beschichtung mit leitfähigem Metall ist vermindert. Die Sputterprodukte sind unmagnetisch, so daß sie die beschriebenen Kurzschlüsse im Magnetfeld nicht mehr verursachen können. Penning-Vakuummeter mit Titan-Katoden haben daher über lange Zeit auch in Beschichtungsprozessen eine stabile Anzeige. Überraschenderweise ist außerdem das Zündverhalten verbessert.

Weitere Vorteile und Einzelheiten der Erfindung sollen anhand eines in den Figuren dargestellten Ausführungsbeispieles erläutert werden.

Das dargestellte Penning-Vakuummeter 1 umfasst das Gehäuse 2 mit dem Anschlussflansch 3 und die außerhalb des Gehäuses angeordneten Magneten 4. Die von der Anschlussbuchse 5 sich in das Innere des Gehäuses 2 erstreckende Stromdurchführung 6 trägt eine ringförmige Anode 7 mit dem Zündstift 8.

Die Kathode 11 ist ein U-förmiges Blech, dessen Schenkel 12, 13 die Anode 7 umfassen. Sie erstrecken sich im wesentlichen parallel zur Ebene des Anodenringes 7.

Das Katodenblech 11 ist klemmend im Gehäuse 2 befestigt. Der die Schenkel 12, 13 verbindende Abschnitt 14 liegt im Bereich der Öffnung des Flansches 3. Er ist mit Aussparungen 15 versehen, um einen ausreichenden Leitwert für die Gase sicherzustellen.

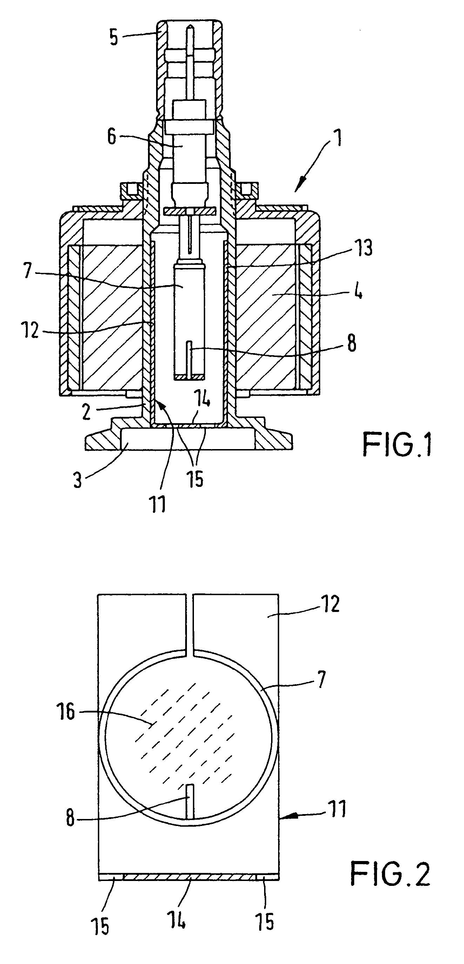

Figur 2 zeigt eine Draufsicht auf die Innenseite des Schenkels 12 des U-förmigen Katodenblechs 11. Durch gestrichelte Linien 16 ist angedeutet, dass der der Öffnung des Anodenringes 7 zugewandte Bereich des Schenkels 12 aufgerauht ist, zum Beispiel durch Sandstrahlen. Das Zündverhalten wird dadurch zusätzlich verbessert, da die entstehenden Spitzen die Feldemission von Elektronen begünstigen.

## Patentansprüche

1. Penning-Vakuummeter (1) mit einem Gehäuse (2), mit einem außerhalb des Gehäuses (2) befindlichen Magneten (4) sowie mit innerhalb de Gehäuses (2) angeordneten Elektroden die eine Anode (7) sowie eine Katode (11) umfassen, **dadurch gekennzeichnet, daß** die Katode (11) zumindest überwiegend aus Titan besteht und daß der Anode (7) zugewandte Bereiche (16) der Oberfläche der Katode (11) aufgerauht sind.

2. Vakuummeter nach Anspruch 1, **dadurch gekennzeichnet, daß** die Katode ein die Anode (7) umfassendes U-förmiges Blech (11) ist, das klemmend im Gehäuse (2) des Vakuummeters (1) befestigt ist.

3. Vakuummeter nach Anspruch 2, **dadurch gekennzeichnet, daß** die Anode (7) ringförmig ausgebildet ist und daß sich die Schenkel (12, 13) des U-förmigen Katodenblechs (11) etwa parallel zur Ebene des Anodenringes (7) erstrecken.

4. Vakuummeter nach Anspruch 3, **dadurch gekennzeichnet, daß** sich der die Schenkel (12, 13) verbindende Abschnitt (14) des U-förmigen Katodenblechs (11) im Bereich der Öffnung des Flansches (3) befindet.

5. Vakuummeter nach Anspruch 4, **dadurch gekennzeichnet, daß** der Abschnitt (14) mit Aussparungen (15) ausgerüstet ist.

6. Vakuummeter nach einem der Ansprüche 1 bis 7, **dadurch gekennzeichnet, daß** die an Katode (11) und Anode (7) angelegte Gleichsspannung im Betrieb etwa 2 kV beträgt.

## Claims

1. A Penning vacuum meter (1) with a housing (2), a magnet (4) located outside of said housing (2), and with electrodes comprising one anode (7) and one cathode (11) located inside of said housing (2), **characterized by**:
the cathode (11) consisting, at least to the most, of titanium, and the surface regions of the anode (7) directed toward the surface of the cathode (11) being a rough surface.

2. The Penning vacuum meter of claim 1, further **characterized by**:
the cathode consisting of a U-shaped metal sheet (11) that surrounds the anode (7), said metal sheet being wedged into the housing (2) of the vacuum meter (1).

3. The Penning vacuum meter of claim 2, further **characterized by**:
the anode (7) being of a ring-shaped design, and the two legs (12, 13) of the U-shaped metal-sheet cathode (11) being oriented approximately parallel to the plane of the anode ring (7).

4. The Penning vacuum meter of claim 3, further **characterized by**:
the metal-sheet section (14) that connects the two legs (12, 13) of the U-shaped metal-sheet cathode (11) being located in proximity of the opening of the flange (3).

5. The Penning vacuum meter of claim 4, further **characterized by**:
the metal-sheet section (14) being provided with opening holes (15).

6. The Penning vacuum meter of any one of claims 1 through 5 (7), further **characterized by**:
the voltage applied between the cathode (11) and the anode (7) being approximately 2 kV during operation.

## Revendications

1. Vacuomètre de Penning (1) avec un boîtier (2), avec un aimant (4) disposé à l'extérieur du boîtier (2), ainsi qu'avec des électrodes disposées à l'intérieur du boîtier qui coomprennent une anode (7) et une cathode (11), **caractérisé en ce que** la cathode (11) est constituée au moins principalement de titane et **en ce que** les zones (16) de la surface supérieure de la cathode (11) tournées vers l'anode (7) sont rendues rugueuses.

2. Vacuomètre selon la revendication 1, **caractérisé en ce que** la cathode est une tole en forme de U (11) entourant l'anode (7), qui est fixée par serrage dans le boîtier (2) du vacuomètre (1).

3. Vacuomètre selon la revendication 2, **caractérisé en ce que** l'anode (7) est de forme annulaire et **en ce que** les branches (12, 13) de la tôle de cathode en U (11) s'étendent à peu près parallèlement au plan de l'anneau formant l'anode (7).

4. Vacuomètre selon la revendication 3, **caractérisé en ce que** la section (14) reliant les branches ((12, 13) de la tôle de cathode en forme de U (11) se trouve dans la zone de l'ouverture de la bride (3).

5. Vacuomètre selon la revendication 4, **caractérisé en ce que** la section (14) est pourvue d'un évidement (15).

6. Vacuomètre selon l'une des revendications 1 à 5, **caractérisé en ce que** la tension continue appliquée à la cathode (11) et à l'anode (7) est de 2 kV en service.
